# EUROPEAN PATENT SPECIFICATION

(11) **EP 2 641 760 B1**
(45) Date of publication and mention of the grant of the patent: **29.10.2014**
(21) Application number: 12380014.6
(22) Date of filing: 23.03.2012
(51) Int. Cl.: B60J 1/16, B60J 1/17

(54) **Guide-rail of a power window device for cars and part for clamping the guide-rail to the door panel**
Führungsschiene für ein Fahrzeugfenster und Klemmelement zur Befestigung der Schiene an einer Türplatte
Rail de guidage pour une fenêtre de véhicule et élément de fixation du rail sur un panneau de portière

(43) Date of publication of application: 25.09.2013
(73) Proprietor: Daumal Castellon, Melchor, E-08013 Barcelone (ES)
(72) Inventor: Daumal Castellon, Melchor, E-08013 Barcelone (ES)
(74) Representative: Morgades y Manonelles, Juan Antonio

(56) References cited:
- FR-A1- 2 821 130
- GB-A- 857 371
- GB-A- 2 281 336

## Description

### Object of the Invention:

The invention refers to a kit including a guide rail and a clamping part, according to the preamble of claim 1. Such a kit is known for example from GB 2281336 A.

More specifically the invention refers to a change in the design and configuration of guide rails as used in vehicle power window devices, as well as a new design of the attachment member called flange that secures the guide rail to the vehicle door. The purpose of this to simplify manufacturing and assembly.

### State of the Art:

The manufacturing of guide rails for a vehicle power window device requires the machining of a plate, preferably metal, its folding, and perforation of holes and rivets in different points for securing the guide rail and other elements such as pulleys, electric motor, wires, and metal flanges to secure it to the vehicle door.

Currently, guide rails with the aforementioned elements are secured to the vehicle door with one or more fastening elements commonly called flanges that are riveted or welded to said guide rail and are preferably made of metal. These so-called flanges have the drawback, from the point of view of assembly in the guide rails that for these guide rail attachment operations, riveting and/or welding machines are needed in the assembly line. These machines are very costly and bulky, making the operation of fitting each flange in the guide rail and assembly of the power window device in the vehicle door much more expensive.

### Scope of the Invention:

The purpose of this invention is to offer a new component that can be inserted into a guide rail and secured easily by the operator, as well a guide rail that enables this insertion and attachment without the need to use riveting or welding machines to attach this part to the guide rail.

### Description of the Invention:

The new guide rail referred to in this invention has one or more holes with two or more slots around them, enabling the insertion through one of its ends of respective flange-type part/s that enter said hole/s, and after being rotated along their longitudinal axis, stop the part leaving the guide rail hole.

These guide rail hole/s are preferably circular, although other similar configurations that enable insertion and at the same time retain the piece or attachment element are possible.

According to the preferred embodiment of the invention, the slots made around the outside of each hole have a frustum of a cone section shape, and these slots are distributed uniformly around the perimeter of the hole.

Two or more slots can be made around the hole, for instance 2, 3 or 4, without altering the functionality of the invention.

This guide rail is preferably obtained by machining a steel sheet, so that after stamping and die cutting, one or more holes are made in it, preferably at the ends of the guide rail.

In addition, another aim of this invention is the flange-type securing element, preferably made of plastic and preferably cylindrical in shape, which has some triangular shaped ribs on its sides up to a certain height of the part, the bases of the triangle being close to one of the ends of the part.

These ribs will be preferably as many as the extensions in the guide rail hole, and coinciding with them as regards width, so as to be able to insert these groups of ribs in the respective slots. Each group of ribs, in turn, may be composed of multiple ribs, beside one another.

This component also has one end with a slightly larger diameter than the diameter of the hole, designed to act as a stop with the frontal surface of the guide rail.

In addition, this component, by means of a flange, incorporates a longitudinal hole in its centre to receive a screw, which when it penetrates through one of its ends and is screwed until it is close to the opposite end, it causes the transversal expansion of the wings and together with the triangular design of the ribs helps to immobilise the part in the guide rail hole and also to the door panel.

The assembly of the flange-type part in the guide rail and its securing to the door panel involves first of all inserting the flange-type part in the corresponding guide rail hole, and then turning it so the ribs will stop it coming out. Once one or more parts are secured and turned, the guide rail with its accessories is ready to be incorporated into the panel and in the respective holes in said panel, and tightening a screw through the central part of the component will make it widen transversally in the wing area so it will no longer be able to come out of the door panel and will have no play, thereby avoiding any type of vibration and noise as a result of this joint, which is elastic in character.

Other details and characteristics shall be shown throughout the description below referring to drawings attached to this report which are shown for illustrative but not limiting purposes only in a drawing of the invention.

### Description of the drawings:

Below is a list of the different parts of the invention appearing in the plans, which are indicated in the illustration with their respective numbers: (10) guide rail, (12) side extension of the guide rail (10), (14) depressed area of the guide rail (10), (15) rear surface of the guide rail (17), (16) front surface of the guide rail (17), (17) hole, (18a, 18b) slots, (19) clamping part, (20) side surface of the clamping part (19), (21a, 21b) groups of ribs of the clamping part (19), (22) front base of the clamping part (19), (23) hole for inserting the screw (24), (24) screw, (25) intermediate portion of the clamping part (19), (27) front end of the ribs (21a, 21b), (28) rear end of the ribs (21a, 21b), (30) wings of the clamping part (19), (31) rear base of the clamping part (19).
Figure 1 is a top plan view of a portion of the guide rail (10) object of the invention, before fitting the flange-type part (19).
Figure 2 is the same top plan view of the portion of the guide rail (10) of figure 1, in which the flange-type part has been inserted (19).
Figure 3 is the same top plan view of the portion of the guide rail (10) of figure 1, in which the part for clamping (19), has been inserted and rotated to block the axial movement between the clamping part (19) and the guide rail (10).
Figure 4 is a perspective view of an portion of the flange-type part (19), in which the ribs can be seen (21a, 21b).
Figures 5, 6, 7 and 8 are side elevation views of the different operations for locking the clamping part (19) to the guide rail (10):

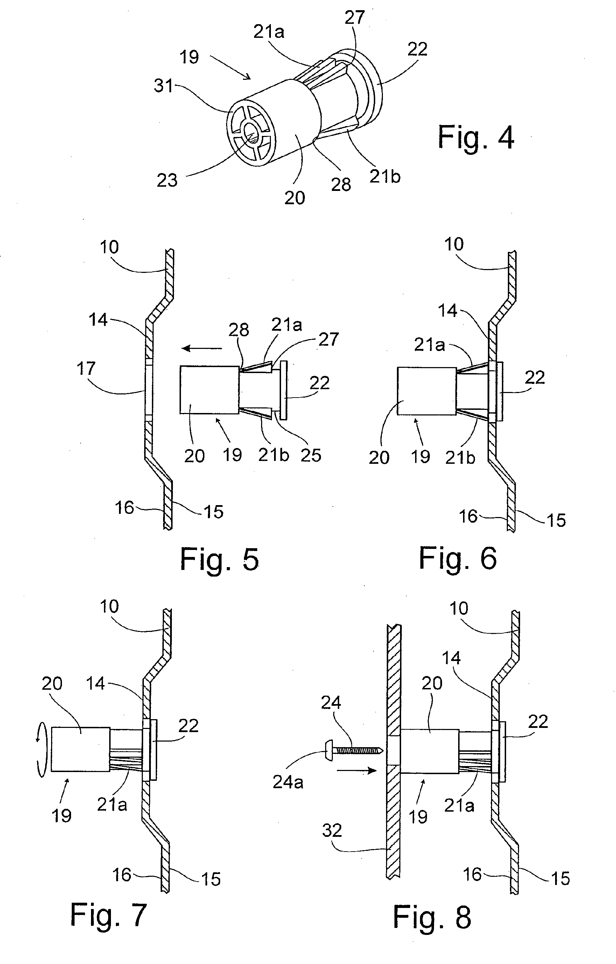

figure 5 shows the insertion position of the clamping part (19) in the hole (17) in the guide rail (10),
figure 6 shows the moment in which the clamping part (19) has been inserted to the end of the hole (17) of the guide rail (10) when the end (22) of the part reached the bottom (19) the rear face opposite the hole (17) of the guide rail (10);
figure 7 shows the moment when the clamping part (19) is rotated by the operator, so that the tabs (21a, 21b) are in a different position with regard to the slots (18a, 18b) around the hole (17) so that they cannot leave the hole again (17) as they are pressed against the front face opposite the hole (17) of the guide rail (10); and
figure 8 shows the moment in which the screw (24) is going to be inserted through the back of the part (19) in the longitudinal hole (23); and

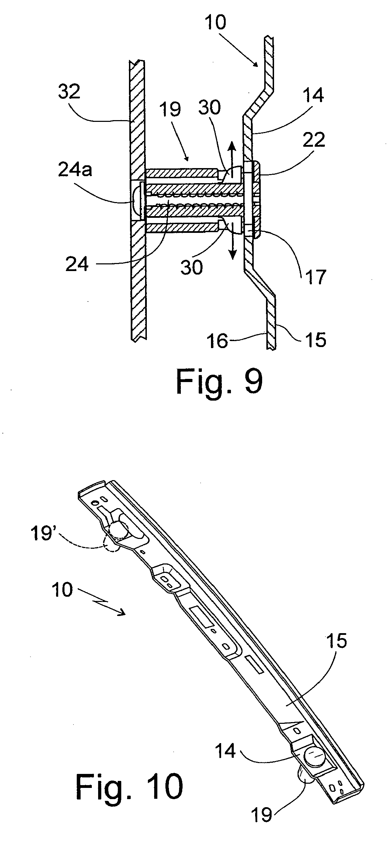

figure 9 shows a partial section view of the part (19) when the screw (24) has been completely inserted in the clamping part (19), which causes on the one hand a widening of the wings (30) of the clamping part (19) thus eliminating any play between parts, and on the other hand, it completely immobilises the clamping part (19) against the guide rail (10).
Figure 10 is a perspective view of a guide rail (10) according to a possible embodiment of the invention, in which some holes (17) have been perforated in the respective ends of said guide rail (10).

### Description of the Invention:

In one of the preferred embodiments of the invention, and as can be seen in figure 4, the flange-type clamping part (19) has a cylindrical body with a longitudinal hole (23) to accept a screw (24), with one end (22) with a slightly larger diameter than the diameter of the guide rail hole (17) acting as a stop against the rear surface (15) of the guide rail (17), and on the side surface (20) of the part (19) there are groups of triangular shaped ribs (21a, 21b) (27) near the opposite end (22) of the part (19).

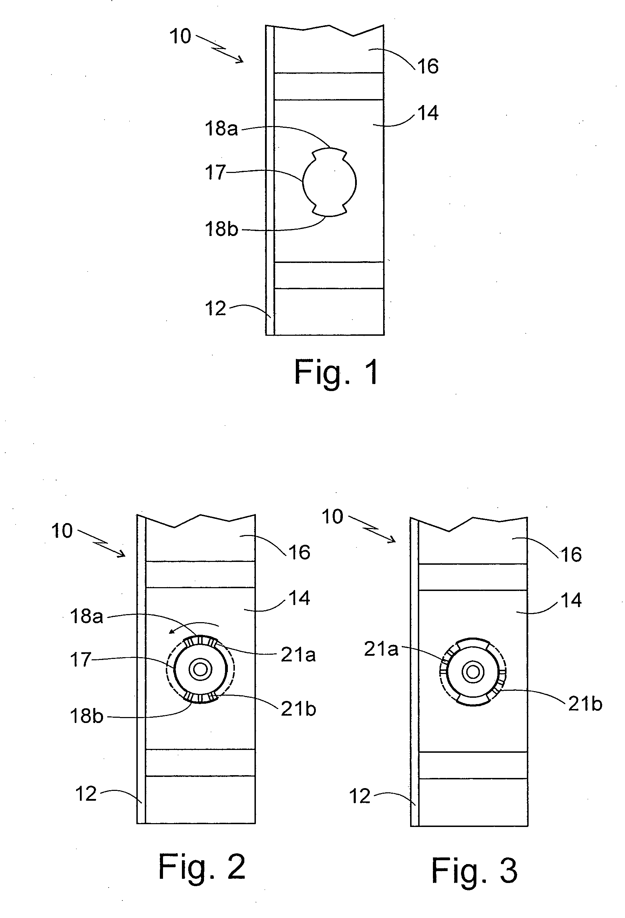

A guide rail (10), as can be seen in in figure 1, has a machined body to adapt to a transversal Z-shaped configuration with a horizontal part that is longitudinal with a rectangular perimeter and a surface, in one of whose larger ends there is a divider perpendicular to the surface that fold perpendicularly in accordance with an extension (12) of small width.

As shown in figure 1, in one part of the guide rail surface (10) a circular hole is stamped (17) with some slots (18a, 18b) with convex exterior bases.

In this hole (17) the corresponding clamping part (19) is inserted perpendicularly acting as a a flange, so that these slots (18a, 18b) enable the passage of coinciding ribs (21a, 21b), and retaining the clamping part (19) in the guide rail because the guide rail (10) is between the front ends (27) of the ribs (21a, 21b) and other wider end (22), the mentioned guide rail (10) is in an intermediate portion (25) of the clamping part (19), see figures 2, 5 and 6.

Then, turning this clamping part (19) a few degrees (for instance between 5 and 60°) on its own axis (longitudinal axis of the part (19)) it is attached to the body of the guide rail (10) and cannot come out, thus securing the panel.

Then the rear surface (31) of the clamping part (19) is ready to receive the adapter (32), shown in figures 8 and 9.

Then a screw (24) is inserted in the hole (23) inside this clamping part (19), which when entering the part (19) causes a transversal widening of the wings (30) and the part (19) is locked in the hole (17) and consequently to the guide rail (10) and all the elements that comprise the power window device, see figures 5 to 9.

The choice of plastic material for manufacturing the clamping part (19) must take into account flexibility of the material, so that in conjunction with the screw (14) it enables the wings to increase their diameter without excessive effort (30), which in addition to a securing element, it avoids any type of vibration of the power window device when it is joined to the door panel, the widening of the wings (30) allows the clamping part (19) to deform, eliminating any play between the clamping part (19) and the hole (17).

Having sufficiently described this invention using the figures attached, it is easy to understand that any modification may be made to the detail which may be deemed to be appropriate, whenever these changes do not alter the scope of the invention as defined in the following claims.

## Claims

1. Kit including a guide rail for a power window device for cars and a clamping part, whereby the rail comprises at least one hole (17), the hole (17) being designed to a accept the clamping part (19) that immobilises the guide rail (10) to a vehicle door panel, **characterised in that** the hole has a perimeter that has two or more slots (18), and **in that** the clamping part presents a cylindrical shape with ribs (21a, 21b) on its sides, the ribs being inserted into the slots when inserting the clamping part through the hole and stopping the clamping part from leaving the hole, whereby the body of the clamping part has a longitudinal hole (23) into which a screw (24) can be threaded in order to lock the clamping part after being inserted through the hole.

2. Kit according to claim 1, wherein the ribs (21a, 21b) are distributed in as many groups as the slots (18a, 18b) in the guide rail hole (10), and the groups coincide with the slots in width.

3. Kit according to claims 1 and 2, wherein the ribs (21a, 21b) occupy a section of the side surface of the clamping part (19).

4. Kit according to any one of preceding claims 2 or 3, wherein each group of ribs has multiple ribs side by side.

5. Kit according to any one of preceding claims 1 to 4, wherein the ribs (21a, 21b) on the sides of the clamping part (19) have a triangular shape with the base coinciding with one of the ends of the part (19).

6. Kit according to claim 1, wherein the clamping part (19) has a one end (22) with a slightly larger diameter than the diameter of the guide rail hole (17), designed to act as a stop with a surface (15) of the guide rail (10).

7. Kit according to claim 1, wherein the slots (18a, 18b) made in each hole (17) have a frustum shape, and are uniformly distributed around its perimeter.

## Patentansprüche

1. Bausatz bestehend aus einer Führungsschiene für eine Fensterhebevorrichtung für Kraftfahrzeuge und einem Klemmteil, wobei die Schiene mindestens eine Öffnung (17) besitzt, die zur Aufnahme des Klemmteils (19), das die Führungsschiene (10) an der Verkleidung einer Fahrzeugtür fixiert, konzipiert ist, **dadurch gekennzeichnet, dass** die Öffnung an ihrem Umfang zwei oder mehr Schlitze (18) aufweist und dass das Klemmteil zylinderförmig ausgebildet und an den Seiten mit Rippen (21a, 21 b) versehen ist, wobei diese Rippen bei der Einführung des Klemmteils in die Öffnung in die Schlitze einrasten und das Klemmteil am Herausrutschen hindern und wobei der Körper des Klemmteils ein längliches Loch (23) aufweist, in das eine Schraube (24) hineingeschraubt werden kann, um das Klemmteil zu sichern, nachdem es in die Öffnung eingeführt wurde.

2. Bausatz nach Anspruch 1, wobei die Rippen (21a, 21b) in so viele Gruppen aufgeteilt sind, wie Gruppen von Schlitzen (18a, 18b) in der Öffnung der Führungsschiene (10) vorhanden sind, und wobei die Gruppen mit den Schlitzen in der Breite übereinstimmen.

3. Bausatz nach Anspruch 1 und 2, wobei die Rippen (21a, 21b) einen Abschnitt der Seitenfläche des Klemmteils (19) einnehmen.

4. Bausatz nach Anspruch 2 oder 3, wobei jede Gruppe von Rippen aus einer Vielzahl von nebeneinander angeordneten Rippen besteht.

5. Bausatz nach einem der vorhergehenden Ansprüche 1 bis 4, wobei die Rippen (21a, 21 b) an den Seiten des Klemmteils (19) eine dreieckige Form besitzen, deren Unterteil mit einem der Enden des Klemmteils (19) übereinstimmt.

6. Bausatz nach Anspruch 1, wobei das eine Ende (22) des Klemmteils (19) einen etwas größeren Durchmesser als die Führungsschienenöffnung (17) besitzt und als Anschlag für eine Fläche (15) der Führungsschiene (10) konzipiert ist.

7. Bausatz nach Anspruch 1, wobei die an jeder Öffnung (17) vorhandenen Schlitze (18a, 18b) kegelstumpfförmig ausgebildet und gleichmäßig um deren Umfang herum verteilt sind.

## Revendications

1. Kit comprenant un rail de guidage pour un dispositif d'alimentation de vitre pour voitures et une pièce de serrage, où le rail comprend au moins un trou (17), ledit trou (17) étant conçu pour loger la pièce de serrage (19) qui immobilise le rail de guidage (10) au panneau de la portière du véhicule, **caractérisé en ce que** le trou présente un périmètre qui a deux rainures (18) ou plus, et **en ce que** la pièce de serrage présente une forme cylindrique avec des nervures (21a, 21b) sur ses côtés, les nervures étant insérées dans les rainures quand est introduite la pièce de serrage à travers le trou et évitant que la pièce de serrage ressorte du trou, de sorte que le corps de la pièce de serrage a un trou longitudinal (23) dans lequel une vis (24) peut être introduite afin de verrouiller la pièce de serrage après son insertion dans le trou.

2. Kit conformément à la revendication 1, où les nervures (21 a, 21 b) sont distribuées dans autant de groupes que de rainures (18a, 18b) dans le trou du rail de guidage (10) et les groupes coïncident avec les rainures en profondeur.

3. Kit conformément aux revendications 1 et 2, où les nervures (21 a, 21 b) occupent une section de la surface latérale de la pièce de serrage (19).

4. Kit conformément à n'importe laquelle des revendications 2 ou 3, où chaque groupe de nervures présente de multiples nervures côte à côte.

5. Kit conformément à n'importe laquelle des revendications 1 à 4, où les nervures (21a, 21b) sur les côtés de la pièce de serrage (19) ont une forme triangulaire et dont la base coïncide avec l'une des extrémités de la pièce (19).

6. Kit conformément à la revendication 1, où la pièce de serrage (19) a une extrémité (22) avec un diamètre légèrement supérieur que le diamètre du trou du rail de guidage (17), conçu pour faire fonction de butée d'une surface (15) du rail de guidage (10).

7. Kit conformément à la revendication 1, où les rainures (18a, 18b) réalisées dans chaque trou (17) ont une forme tronconique, et sont uniformément distribuées autour de son périmètre.
